# EUROPEAN PATENT SPECIFICATION

(11) **EP 2 620 294 B1**
(45) Date of publication and mention of the grant of the patent: **01.11.2017**
(21) Application number: 11826872.1
(22) Date of filing: 21.09.2011
(51) Int. Cl.: B60B 35/18, F16C 19/18, F16C 33/76, F16C 41/00, G01D 5/245, B60B 7/00, F16C 33/72

(54) **BEARING DEVICE FOR A WHEEL**
RADLAGERVORRICHTUNG
DISPOSITIF DE PALIER POUR UNE ROUE

(30) Priority: 22.09.2010 JP 2010212114
(43) Date of publication of application: 31.07.2013
(73) Proprietor: NTN Corporation, Osaka-shi, Osaka 550-0003 (JP)
(72) Inventor: SEKI, Makoto, Iwata-shi Shizuoka 438-8510 (JP); BABA, Tomoko, Iwata-shi Shizuoka 438-8510 (JP)
(74) Representative: Cohausz & Florack
(86) International application number: PCT/JP2011/071496
(87) International publication number: WO 2012/039427

(56) References cited:
- JP-A- 2008 105 626
- JP-A- 2010 106 909
- JP-A- 2010 151 277
- JP-A- 2010 190 421
- JP-B2- 4 244 631
- US-A1- 2010 054 644

## Description

### Field of the Invention

The present invention relates to a wheel bearing apparatus for rotationally supporting a wheel of a vehicle provided with a protecting cover for sealing the inside of the wheel bearing apparatus. Such a apparatus is for instance known from JP-A-2010 106909.

### Description of the Background Art

It has been generally known a wheel bearing apparatus incorporated with a wheel speed detecting apparatus for rotationally supporting a wheel of a vehicle relative to a suspension apparatus and detecting the wheel speed to control an anti-lock braking system (ABS). Such a bearing apparatus generally comprises a sealing apparatus arranged between inner and outer members relatively rotated each other via rolling elements, and a magnetic encoder having magnetic poles alternately arranged along its circumference and being integrated with the sealing apparatus. On the other hand, a wheel speed detecting sensor, which is arranged opposite to the magnetic encoder for detecting the variation of magnetic poles of the magnetic encoder due to the rotation of wheel can be mounted on a knuckle forming part of a suspension apparatus of a vehicle after the wheel bearing apparatus has been mounted on the knuckle.

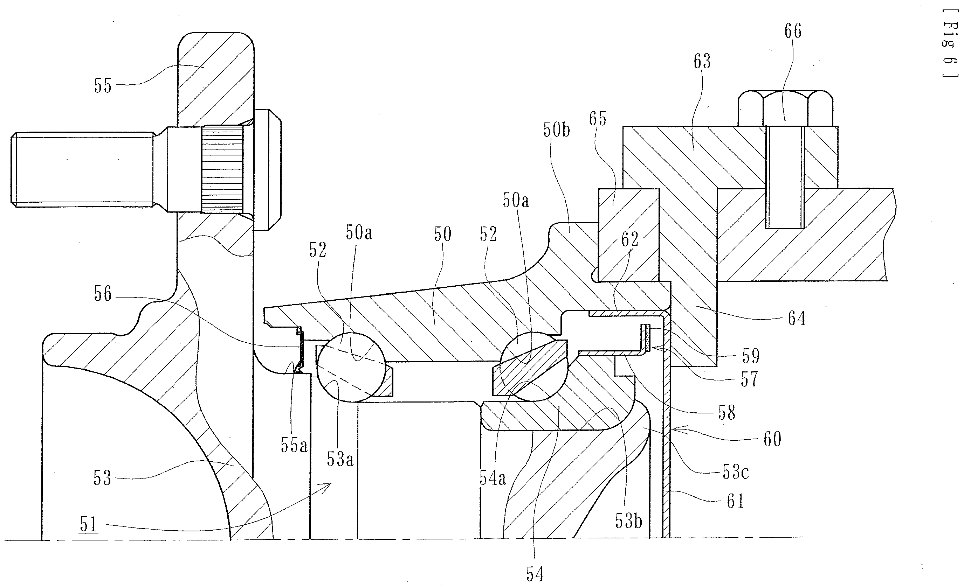

It is known an example of the wheel bearing apparatus for example as shown in Fig. 6. The wheel bearing apparatus comprises an outer member 50, an inner member 51, and a plurality of balls 52 contained therebetween. The inner member 51 comprises a hub wheel 53 and an inner ring 54 press-fitted onto the hub wheel 53.

The outer member 50 has a body mounting flange 50b secured to the knuckle 65 forming a suspension apparatus on its outer circumference integrally formed on its outer circumference and double row outer raceway surfaces 50a, 50a integrally formed on its inner circumference. In addition a sensor 63 is secured on the knuckle 65 by a screw 66.

The hub wheel 53 comprises on its one end a wheel mounting flange 55 on which a wheel (not shown) is mounted, on its outer circumference an inner raceway surface 53a and a cylindrical portion 53b axially extending from the inner raceway surface 53a. The inner ring 54 comprises on its outer circumference an inner raceway surface 54a and is axially secured on the cylindrical portion 53b by a caulked portion 53c formed by plastically deforming the end of the cylindrical portion 53b.

A seal ring 56 is inserted into the outer side end of the outer member 50 and its lip is slidably contacted to the base 55a of the wheel mounting flange 55. On the other hand, an encoder 57 is fitted onto the inner-side outer circumference of the inner ring 54. The encoder 57 comprises an annular supporting ring 58 having a substantially "L" shaped cross-section and an annular encoder body 59 adhered to a whole side surface of the supporting ring 58. The encoder body 59 constructs a rotary encoder for detecting the wheel speed having poles N and S alternately arranged along its circumstances.

The inner-side opening of the outer member 50 is closed by a protecting cover 60. This cover 60 is formed of non-magnetic plate materials such as non-magnetic stainless steel plate, aluminum alloy plate or high functional resin etc. as having a simple "flat-U" configuration and comprises a disc shaped closing plate portion 61 and a cylindrical fitting portion 62 around the closing plate portion 61.

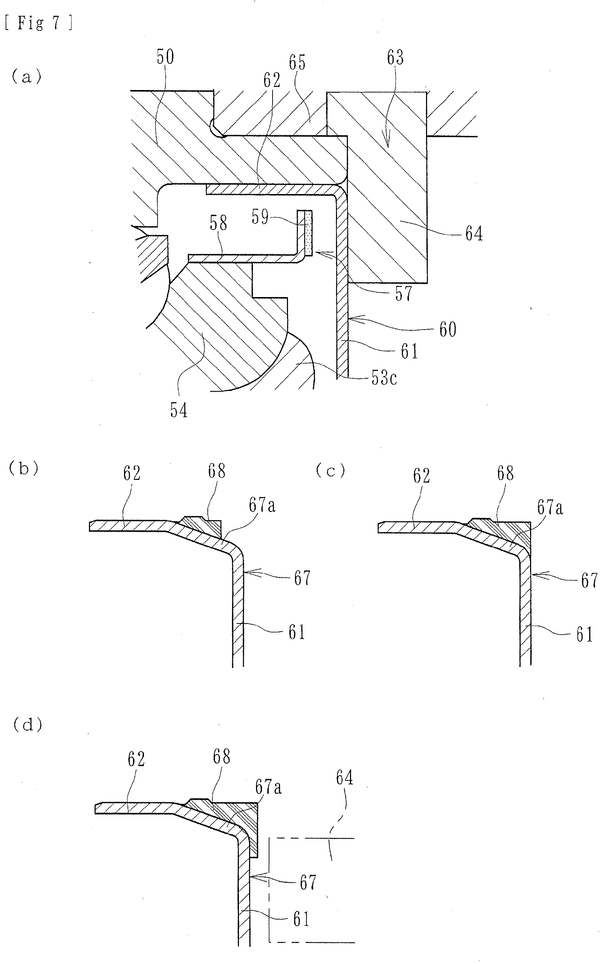

As shown in Fig. 7(a), the side surface of the encoder body 59 forming the encoder 57 is closely opposed to the protecting cover 60. On the other hand, a detecting portion 64 of the sensor 64 is arranged closely to or contacted to the side surface of the cover 60 via the cover 60. The presence of the cover 60 enables to prevent enter of water, iron dusts, magnetized debris etc. into the space between the sensor 63 and the encoder 57 and thus to prevent breakage of the sensor 63 and the encoder 57 as well as to prevent disturbance or degradation of regular and cyclic variation of the magnetic characteristics of the encoder body 59 (see e.g. Patent Document 1 below).

### Documents of the Prior Art

### Patent Document

Reference Patent Document 1: Japanese Laid-open Patent Publication No. 249138/2000

### Disclosure of the Invention

### Problems to be solved by the Invention

However, there are following problems in the wheel bearing apparatus of the prior art. That is, since the protecting cover 60 is mounted on the outer member 50 only by metal-to-metal fitting, sufficient sealing in the fitted portion cannot be attained without providing high accuracy of surface finish and roughness in the fitting surfaces. In addition, since the cover 60 is formed as having a cross-sectional configuration of a simple "C"-shape, the rigidity of the protecting cover 60 is insufficient and thus it is afraid that the cover 60 would be deformed by bounced pebbles and thus contacted with the encoder body 59.

It will be able to think of attaining the sealability of the fitting portion of the protecting cover 67 by providing, as shown in Fig. 7(b), a sealing member 68 of synthetic rubber on the outer circumference of a radially tapered portion 67a formed between a cylindrical fitting portion 62 and the closing plate portion 61 and by elastically contacting the sealing member 68 against the outer member 50. However, this is not preferable since the die-pressing at the radially tapered portion 67a during vulcanizing process of the sealing member 68 requires a high skill and technology with respect to the accuracy of the aligning portion and the die-pressing would cause distortion in the cover 67.

In addition, when the sealing member 68 is vulcanizing adhered so that it extends to the side surface of the closing plate portion 61 as shown in Fig. 7(c), although generation of the distortion of the cover 67 can be prevented, the rubber of the sealing member 68 will be bulged out from the bent portion to the side surface of the closing plate portion 61 and thus it is afraid that the sealing member 68 would interfere with the detecting portion 64 of the sensor 63.

Furthermore, when the sealing member 68 is vulcanizing adhered so that it is further projected toward the side surface of the closing plate portion 61 as shown in Fig. 7(d), although generation of the distortion of the cover 67 and bulging-out of the sealing member 68 from the bent portion toward the side surface of the closing plate portion 61 can be prevented, it should be necessary to arrange the sensor 63 so as to avoid interference between the projected portion of the sealing rubber and the detecting portion 64 of the sensor 64 and thus detecting accuracy would be detracted due to increase of air gap between the encoder 57 and the detecting portion 64.

Accordingly, it is an object of the present invention to provide a wheel bearing apparatus which can protect the magnetic encoder with improving the sealability of the fitted portion between the protecting cover and the outer member and can improve the detecting accuracy and reliability of the rotational speed of a wheel.

### Means for solving problems

For achieving the objects mentioned above, there is provided, according to the present invention of claim 1, a wheel bearing apparatus comprising an outer member integrally formed on its inner circumference with double row outer raceway surfaces; an inner member including a hub wheel and at least one inner ring, the hub wheel being integrally formed on its one end with a wheel mounting flange and having a cylindrical portion axially extending from the wheel mounting flange, the inner ring being press-fitted onto the cylindrical portion of the hub wheel, the hub wheel and the inner ring being formed on their outer circumferences with double row inner raceway surfaces opposing to the double row outer raceway surfaces; double row rolling elements contained between the inner and outer raceway surfaces of the inner and outer members; a magnetic encoder mounted on the outer circumference of the inner ring; and annular openings formed by the inner and outer members being sealed by a seal mounted on the outer-side end of the outer member and by a protecting cover mounted on the inner-side end of the outer member characterized in that the protecting cover is formed of non-magnetic material as having a substantially dish-shaped configuration and comprises a cylindrical fitting portion adapted to be press-fitted onto the inner circumference of the inner-side end of the outer member, a disc-shaped shielding portion extending radially inward from the fitting portion via a radially tapered portion and adapted to be closely arranged or contacted by a sensor, and a bottom portion extending from the shielding portion via a stepped portion and covering the inner-side end of the inner member; that a flat relief portion is formed between the radially tapered portion and the shielding portion in parallel with the shielding portion and set slightly back from the shielding portion toward the radially tapered portion; and that an elastic member is integrally adhered to the outer circumference of the radially tapered portion via vulcanizing adhesion and adapted to be elastically contacted with the inner circumference of the inner-side end of the outer member.

In the wheel bearing apparatus of a so-called inner ring rotation type of claim 1 of the present invention, since the protecting cover is formed of non-magnetic material as having a substantially dish-shaped configuration and comprises a cylindrical fitting portion adapted to be press-fitted onto the inner circumference of the inner-side end of the outer member, a disc-shaped shielding portion extending radially inward from the fitting portion via a radially tapered portion and adapted to be closely arranged or contacted by a sensor, and a bottom portion extending from the shielding portion via a stepped portion and covering the inner-side end of the inner member; a flat relief portion is formed between the radially tapered portion and the shielding portion in parallel with the shielding portion and set slightly back from the shielding portion toward the radially tapered portion; and an elastic member is integrally adhered to the outer circumference of the radially tapered portion via vulcanizing adhesion and adapted to be elastically contacted with the inner circumference of the inner-side end of the outer member, it is possible to provide a wheel bearing apparatus which can improve the sealability of the fitted portion between the protecting cover and the outer member as well can improve the detecting accuracy and reliability of the rotational speed of a wheel with surely preventing the bulged-out rubber of the elastic member from interfering with the sensor and from giving adverse influences to the detecting accuracy. This is because that the bulged-out rubber of the elastic member does not reach the shielding portion of the protecting cover even if the rubber of the elastic member would be bulged out from the radially tapered portion of the protecting cover to the side surface of the relief portion.

It is preferable as defined in claim 2 that the elastic member comprises an annular portion formed as having an outer diameter smaller than that of the fitting portion of the protecting cover and a projected portion formed as having an outer diameter larger than that of the fitting portion of the protecting cover and adapted to be press-fitted into the inner circumference of the inner-side end of the outer member via a predetermined interference. This makes it possible to further improve the sealability of the fitting surfaces between the outer member and the protecting cover.

It is preferable as defined in claim 3 that the elastic member extends over a region from the outer circumference of the radially tapered portion to the inner-side surface of the relief portion. The provision of the relief portion makes it possible to arrange the die-pressing portion during vulcanizing process of rubber co-planar with the relief portion and thus to perform easy and convenient vulcanization with preventing bulging out of rubber as well as to prevent generation of distortion of the protecting cover.

It is also preferable as defined in claim 4 that the elastic member is securely adhered to the protecting cover over a region from the outer circumference of the radially tapered portion to a position slightly projected from the inner-side surface of the relief portion toward the shielding portion. This makes it possible to increase the adhesive strength of the elastic member and thus to prevent separation of rubber from the protecting cover and to improve the reliability of the wheel bearing apparatus.

It is preferable as defined in claim 5 that the protecting cover is press-formed of austenitic stainless steel sheet and a bent portion between the relief portion and the shielding portion of the protecting cover is set spaced apart from the sensing area of the sensor by a predetermined separated amount (distance) so that it does not enter into the sensing area. This makes it possible to prevent adverse magnetic influence to the encoder and thus to obtain a desirable detecting accuracy even if the bent portion would be excessively deformed during pressing process and transformed to martensite.

It is also preferable as defined in claim 6 that the diameter of the bent portion between the relief portion and the shielding portion of the protecting cover is set larger than the outer diameter of the encoder. This makes it possible to surely prevent the encoder from being influenced by magnetization of the bent portion due to its martensitic transformation and to obtain a desirable detecting accuracy.

It is preferable as defined in claim 7 that the protecting cover is press-formed so that the relief portion has a sheet thickness thinner than that of other portions of the protecting cover. This makes it possible the relief portion to absorb a deformation of the protecting cover caused during press-fitting of the protecting cover into the outer member and thus to suppress the deformation of the protecting cover which would give a substantial influence to the detecting accuracy.

It is preferable as defined in claim 8 that the sheet thickness of the relief portion of the protecting cover is set 0.4 mm or more and the ratio of the sheet thickness of the relief portion and that of other portions of the protecting cover is set 80% (t1/t0≥0.80) or more. This enables to assure the rigidity of the protecting cover.

It is preferable as defined in claim 9 that the bottom portion of the protecting cover has multiple bent portions so as to have an outline configuration along the inner-side end of the inner member. This makes it possible to increase the rigidity of the protecting cover and thus to prevent its deformation which would be caused by bounced pebbles.

It is also preferable as defined in claim 10 that the material of the elastic member is selected from a group of HNBR, EPDM, ACM, FKM and silicone rubber. This enables the elastic member to have excellent heat resistance and chemical resistance and thus to assure the durability of the elastic member for a long term.

### Effects of the Invention

According to the wheel bearing apparatus of the present invention, since it comprises an outer member integrally formed on its inner circumference with double row outer raceway surfaces; an inner member including a hub wheel and at least one inner ring, the hub wheel being integrally formed on its one end with a wheel mounting flange and having a cylindrical portion axially extending from the wheel mounting flange, the inner ring being press-fitted onto the cylindrical portion of the hub wheel, the hub wheel and the inner ring being formed on their outer circumferences with double row inner raceway surfaces opposing to the double row outer raceway surfaces; double row rolling elements contained between the inner and outer raceway surfaces of the inner and outer members; a magnetic encoder mounted on the outer circumference of the inner ring; and annular openings formed by the inner and outer members being sealed by a seal mounted on the outer-side end of the outer member and by a protecting cover mounted on the inner-side end of the outer member and is characterized in that the protecting cover is formed of non-magnetic material as having a substantially dish-shaped configuration and comprises a cylindrical fitting portion adapted to be press-fitted onto the inner circumference of the inner-side end of the outer member, a disc-shaped shielding portion extending radially inward from the fitting portion via a radially tapered portion and adapted to be closely arranged or contacted by a sensor, and a bottom portion extending from the shielding portion via a stepped portion and covering the inner-side end of the inner member; that a flat relief portion is formed between the radially tapered portion and the shielding portion in parallel with the shielding portion and set slightly back from the shielding portion toward the radially tapered portion; and that an elastic member is integrally adhered to the outer circumference of the radially tapered portion via vulcanizing adhesion and adapted to be elastically contacted with the inner circumference of the inner-side end of the outer member, the bulged-out rubber of the elastic member does not reach the shielding portion of the protecting cover even if the rubber of the elastic member would be bulged out from the radially tapered portion of the protecting cover to the side surface of the relief portion, and accordingly it is possible to provide a wheel bearing apparatus which can improve the sealability of the fitted portion between the protecting cover and the outer member as well can improve the detecting accuracy and reliability of the rotational speed of a wheel with surely preventing the bulged-out rubber of the elastic member from interfering with the sensor and from giving adverse influences to the detecting accuracy.

### Brief Description of the Drawings

[Fig. 1] A longitudinal-section view of a first preferable embodiment of a wheel bearing apparatus of the present invention;
[Fig. 2] A partially enlarged partial view of Fig. 1;
[Fig. 3] A partially enlarged partial view showing a modification of the first embodiment of Fig. 2;
[Fig. 4] A longitudinal-section view of a second preferable embodiment of a wheel bearing apparatus of the present invention;
[Fig. 5] A partially enlarged partial view of Fig. 4;
[Fig. 6] A longitudinal-section view of a wheel bearing apparatus of the prior art;
[Fig. 7(a)] A partially enlarged partial view of Fig. 6; and
[Figs. 7(b)∼(d)] Partially enlarged partial views showing modifications of Fig. 7(a).

### A preferable mode for carrying out the Invention

Preferable mode for carrying out the present invention is a wheel bearing apparatus comprising an outer member integrally formed on its outer circumference with a body mounting flange to be mounted on a knuckle of a vehicle and also formed on its inner circumference with double row outer raceway surfaces; an inner member including a hub wheel and an inner ring, the hub wheel being integrally formed on its one end with a wheel mounting flange and on its outer circumference with one inner raceway surface opposing to one of the outer raceway surfaces and having a cylindrical portion axially extending from the inner raceway surface, the inner ring being formed on its outer circumference with the other inner raceway surface opposing to the other of the outer raceway surfaces and axially secured on the hub wheel with being bearing pre-pressured condition by a caulked portion formed by plastically deforming the end of the cylindrical portion of the hub wheel; a magnetic encoder mounted on the inner ring; a seal mounted on an outer-side end of the outer member; and a protecting cover mounted on the inner-side end of the outer member to seal an annular opening formed by the outer and inner members characterized in that the protecting cover is press-formed of non-magnetic material as having a substantially dish-shaped configuration and comprises a cylindrical fitting portion adapted to be press-fitted onto the inner circumference of the inner-side end of the outer member, a disc-shaped shielding portion extending radially inward from the fitting portion via a radially tapered extending from the fitting portion and adapted to be closely arranged or contacted by a sensor, and a bottom portion extending from the shielding portion via a stepped portion and covering the inner-side; that the protecting cover is formed of non-magnetic material as having a substantially dish-shaped configuration and comprises a cylindrical fitting portion adapted to be press-fitted onto the inner circumference of the inner-side end of the outer member, a disc-shaped shielding portion extending radially inward from the fitting portion via a radially tapered portion and adapted to be closely arranged or contacted by a sensor, and a bottom portion extending from the shielding portion via a stepped portion and covering the inner-side end of the inner member; that a flat relief portion is formed between the radially tapered portion and the shielding portion in parallel with the shielding portion and set slightly back from the shielding portion toward the radially tapered portion; and that the elastic member comprises an annular portion formed as having an outer diameter smaller than that of the fitting portion of the protecting cover and a projected portion formed as having an outer diameter larger than that of the fitting portion of the protecting cover and adapted to be press-fitted into the inner circumference of the inner-side end of the outer member.

Preferable embodiments of the present invention will be described with reference to accompanied drawings.

### First Embodiment

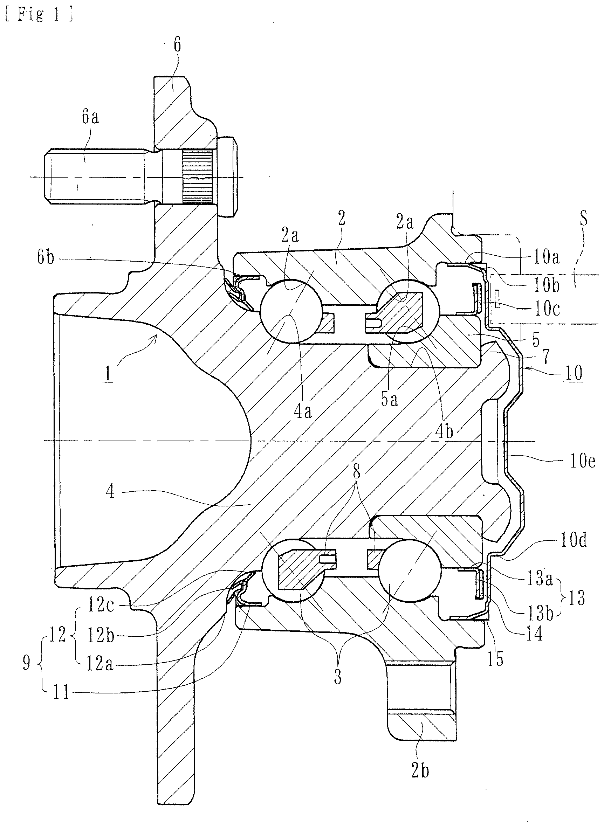

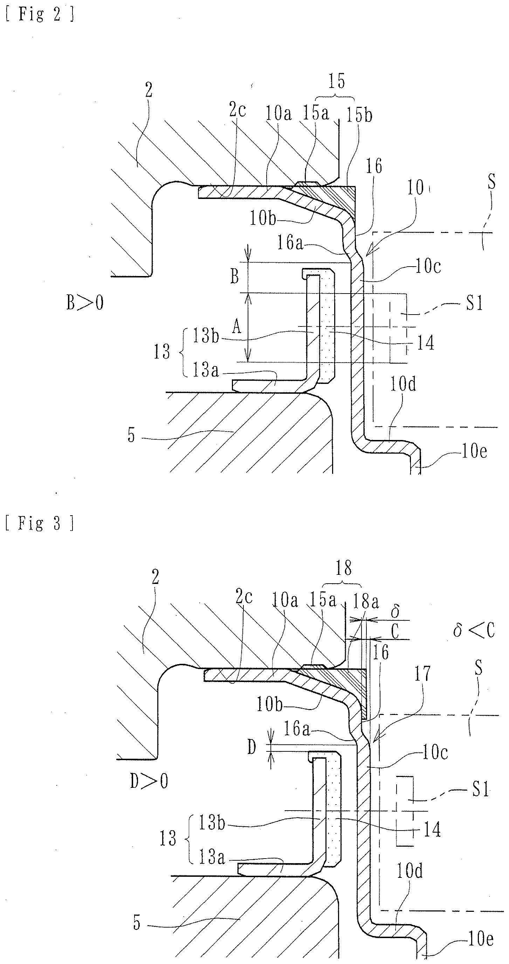

Fig. 1 is a longitudinal-section view of a first preferable embodiment of a wheel bearing apparatus of the present invention, Fig. 2 is a partially enlarged partial view of Fig. 1, and Fig. 3 is a partially enlarged partial view showing a modification of Fig. 2. In the description below, an outer side of a bearing apparatus when it is mounted on a vehicle is referred to as "outer- side" (the left-side in drawings), and an inner side of a bearing apparatus when it is mounted on a vehicle is referred to as "inner-side" (the right-side in drawings).

The wheel bearing apparatus of the present invention is a so-called "third generation" type and comprises an inner member 1, an outer member 2, and double row rolling elements (balls) 3, 3 contained between the inner and outer members 1, 2. The inner member 1 comprises a hub wheel 4 and an inner ring 5 press-fitted onto the hub wheel 4 via a predetermined interference.

The outer member 2 is made of medium/high carbon steel such as S53C including carbon of 0.40-0.80% by weight and integrally formed on its outer circumference integrally with body mount flange 2b adapted to be mounted on a knuckle (not shown) and also formed on its inner circumference with double row outer raceway surfaces 2a, 2a. These double row outer raceway surfaces 2a, 2a are hardened by high frequency induction quenching as having a surface hardness of 58-64 HRC.

The hub wheel 4 is integrally formed, on its outer side end, with a wheel mount flange 6 for mounting a wheel (not shown), and hub bolts 6a are arranged on the wheel mounting flange 6 at its circumferentially equidistant positions. In addition, the hub wheel 4 is formed, on its outer circumference, with one inner raceway surface 4a corresponding to one (outer-side) of the outer raceway surfaces 2a, and has a cylindrical portion 4b axially extending from the inner raceway surface 4a. On the other hand, the inner ring 5 is formed, on its outer circumference, with the other inner raceway surface 5a corresponding to the other (inner-side) of the double row outer raceway surfaces 2a, 2a and press-fitted onto the cylindrical portion 4b of the hub wheel 4 via a predetermined interference. The inner ring 4 is axially secured on the cylindrical portion 4b of the hub wheel 4 under a predetermined bearing pre-pressure by a caulked portion 7 formed by plastically deforming the end of the cylindrical portion 4b radially outward.

The double row rolling elements 3 and 3 are contained between the outer raceway surfaces 2a, 2a of the outer member 2 and the oppositely arranged inner raceway surfaces 4a, 5a and held therein by cages 8, 8. A seal 9 is mounted in an annular opening formed between the outer member 2 and the inner member 1 and a protecting cover 10 is mounted in an inner side opening to prevent leak of grease contained within the bearing apparatus as well as entering of rain water or dusts into the bearing.

Although it is shown herein a double row angular contact ball bearing using balls as rolling elements 3, the present invention is not limited to such a bearing and may be applied to a double row tapered roller bearing using tapered rollers as rolling elements 3. In addition, although it is shown herein a bearing of the third generation type in which the inner raceway surface 4a is directly formed on the outer circumference of the hub wheel 4, the present invention can be applied to the first or second generation type bearing in which a pair of inner rings are press-fitted onto a cylindrical portion 4b of the hub wheel 4.

The hub wheel 4 is made of medium/high carbon steel such as S53C including carbon of 0.40∼0.80% by weight and is hardened by high frequency induction hardening as having a surface hardness of 58∼64 HRC in a region including the inner raceway surface 4a, an inner-side base portion 6b of the wheel mounting flange 6 and the cylindrical portion 4b of the hub wheel 4. This makes it possible not only to improve the anti-abrasion characteristics of the base portion 6b forming a seal land portion of a seal 9 hereinafter described but to apply a sufficient mechanical strength of the wheel mounting flange 6 against the rotary bending load and thus to improve the durability of the hub wheel 4. The caulked portion 7 is not quenched and remained as its surface hardness after forging. This makes the caulking process easy and possible to prevent generation of micro-cracks. On the other hand, the inner ring 5 and balls 3 are made of high carbon chrome steel such as SUJ2 and hardened to their core by dipping quenching so as to have a surface hardness of 58∼64 HRC.

The seal 9 is formed as an integrated seal comprising a core metal 11 press-fitted into the outer-side end of the outer member 2 via a predetermined interference and a sealing member 12 adhered to the core metal 11. The core metal 11 press-formed of austenitic stainless steel sheet (JIS SUS 304 etc.) or cold rolled steel sheet (JIS SPCC etc.) as having a substantially "L"-shaped cross-sectional configuration.

On the other hand, the sealing member 12 is formed of synthetic rubber such as NBR (acrylonitrile-butadiene rubber) and integrally adhered to the core metal 11 via vulcanizing adhesion. The sealing member 12 comprises a side lip 12a inclined radially outward and slidably contacted to the inner-side surface of the wheel mounting flange 6 via a predetermined axial interference, another side lip 12b slidably contacted to the base portion 6b having a circular arc cross-sectional configuration via a predetermined axial interference, and a grease lip 12c inclined toward the inner-side of bearing.

A support ring 13 having a substantially "L"-shaped cross-section is press-fitted onto the inner ring 5. The support ring 13 comprises a cylindrical portion 13a adapted to be press-fitted onto the outer circumference of the inner ring 5 and a standing portion 13b extending radially outward from the cylindrical portion 13a. A magnetic encoder 14 is integrally adhered to one side surface of the standing portion 13b via vulcanizing adhesion. The magnetic encoder 14 is formed of a rubber magnet of synthetic rubber mingled with magnetic powder such as ferrite and has magnetic poles N and S alternately arranged along its circumference.

The support ring 13 is press-formed of ferromagnetic steel plate e.g. ferritic stainless steel sheet (JIS SUS 430 etc.) or preserved cold rolled sheet (JIS SPCC etc.). This makes it possible to prevent generation of rust on the support ring 13 and to increase the output of the magnetic encoder 14 and accordingly to keep stable detecting accuracy.

The protecting cover 10 mounted on the inner-side end of the outer member 2 is press-formed of non-magnetic austenitic stainless steel sheet (JIS SUS 304 etc.) or preserved cold rolled steel sheet (JIS SPCC etc.) as having a substantially dish-shaped configuration. The protecting cover 10 comprises a cylindrical fitting portion 10a adapted to be press-fitted onto the inner circumference of the inner-side end of the outer member 2, a disc-shaped shielding portion 10c extending radially inward from the fitting portion 10a via a radially tapered portion 10b, and a bottom portion 10e extending from the shielding portion 10c via a cylindrical portion i.e. stepped portion 10d and covering the inner-side end of the inner member 1. The bottom portion 10e of the protecting cover 10 has multiple bent portions so as to have an outline configuration along the inner-side end of the inner member 1. This makes it possible to increase the rigidity of the protecting cover 10 and thus to prevent its deformation which would be caused by bounced pebbles. In this embodiment, although it is shown that the protecting cover 10 is formed of non-magnetic steel sheet, the present invention is not limited to this embodiment and other non-magnetic material such as plastics, aluminum alloy or titanium alloy etc. may be used.

As shown in the enlarged view of Fig. 2, a detecting portion S1 of a sensor S is closely positioned or contacted to the shielding portion 10c of the protecting cover 10 so that the detecting portion S1 is opposed to the protecting cover 10 via a predetermined air gap (axial gap). Since the protecting cover 10 is formed of non-magnetic material, no influence is applied to the path of magnetic flux and thus it is possible to improve the corrosion resistance and durability of the wheel bearing apparatus for a long term.

According to this embodiment, there is provided a relief portion 16 between the radially tapered portion 10b and the shielding portion 10c of the protecting cover 10 which is formed flat and in parallel with the shielding portion 10c and set slightly back from the shielding portion 10c toward the radially tapered portion 10b. An elastic member 15 extends over a region from the outer circumference of the radially tapered portion 10b to the inner-side surface of the relief portion 16. The provision of the relief portion 16 makes it possible to arrange the die-pressing portion (not shown) during vulcanizing process of rubber co-planar with the relief portion 16 and thus to perform easy and convenient vulcanization with preventing bulging out of rubber as well as to prevent generation of distortion of the protecting cover 10.

The elastic member 15 comprises a projected portion 15a and an annular portion 15b and is formed of synthetic rubber such as NBR etc. and integrally adhered to the protecting cover 10 via vulcanizing adhesion. The annular portion 15b has an outer diameter smaller than that of the fitting portion 10a of the protecting cover 10 and the projected portion 15a has an outer diameter larger than that of the fitting portion 10a of the protecting cover 10 and is adapted to be press-fitted into the inner circumference 2c of the inner-side end of the outer member 2 via a predetermined interference. This makes it possible to further improve the sealability of the fitting surfaces between the outer member 2 and the protecting cover 10. In addition, it is possible to provide a wheel bearing apparatus which can improve the detecting accuracy and reliability of the rotational speed of a wheel with surely preventing the bulged-out rubber of the elastic member 15 from interfering with the sensor S and from giving adverse influences to the detecting accuracy. This is because that the bulged-out rubber of the elastic member 15 does not reach the shielding portion 10c of the protecting cover 10 even if the rubber of the elastic member 15 would be bulged out from the radially tapered portion10b of the protecting cover 10 to the side surface of the relief portion 16.

Materials for forming the elastic member 15 are exemplary shown such as HNBR (hydride acrylonitrile-butadiene rubber), EPDM (ethylene-propylene rubber) etc. excellent in the heat resistance and chemical resistance, ACM (poly-acryl rubber), FKM (fluoroelastomer) or silicone rubber.

Furthermore, according to the present invention, a bent portion 16a between the relief portion 16 and the shielding portion 10c of the protecting cover 10 is set spaced apart from a sensing area A of the detecting portion S1 by a predetermined separated amount (distance) B (B>0) so that it does not enter into the sensing area A. This makes it possible to prevent adverse magnetic influence to the encoder 14 due to magnetization of the bent portion 16a by martensitic transformation which would be caused during pressing process.

Fig. 3 shows a modification of the protecting cover 10 of the first embodiment shown in Figs. 1 and 2. The protecting cover 17 of this modification is substantially same as the protecting cover 10 except for partial difference of structure of the elastic member. Thus same reference numerals are used in parts or portions of this modification as those of the first embodiment and detailed description of them will be omitted.

In this modification, the elastic member 18 is formed of synthetic rubber such as nitrile rubber and comprises the projected portion 15a and an annular portion 18a. The elastic member 18 is adhered to the protecting cover 17 over a region from the outer circumference of the radially tapered portion 10b to a position slightly projected from the inner-side surface of the relief portion 16 toward the shielding portion 10c. The projected amount (distance)δ is set smaller than a step height C between the relief portion 16 and the shielding portion 10c (δ<C). This makes it possible to increase the adhesive strength of the elastic member 18 and thus to prevent separation of rubber 18 from the protecting cover 17 and to improve the reliability of the wheel bearing apparatus.

Similarly to the first embodiment, the bent portion 16a between the relief portion 16 and the shielding portion 10c is positioned outside the diameter of the magnetic encoder 14. That is, separated amount (distance) D between the bent portion 16a and the magnetic encoder 14 is larger than 0 (D>0). This makes it possible to surely prevent the encoder from being influenced by magnetization of the bent portion 16a due to its martensitic transformation and to obtain a desirable detecting accuracy.

### Second Embodiment

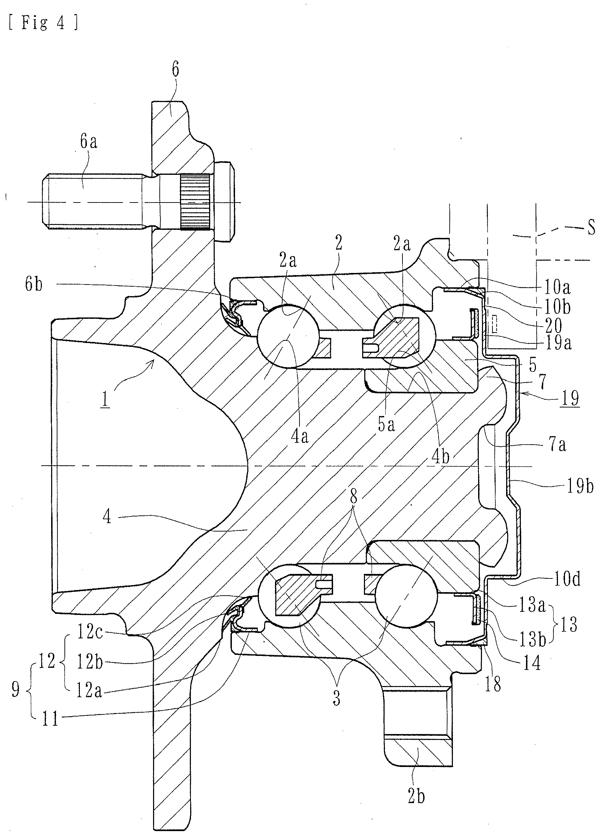

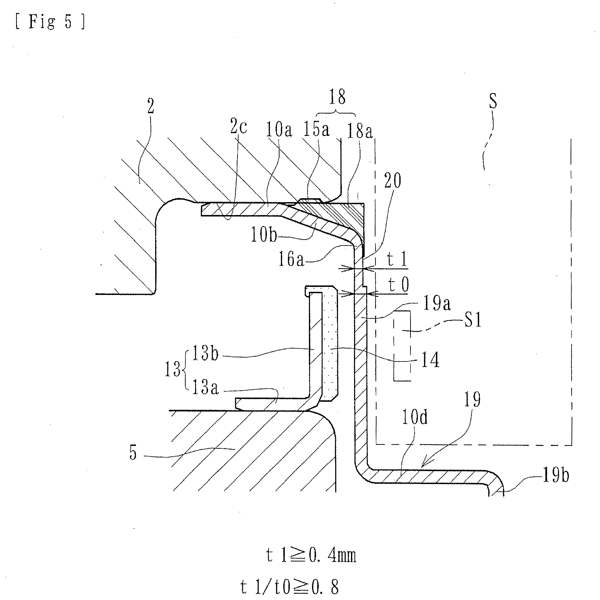

Fig. 4 is a longitudinal-section view of a second preferable embodiment of a wheel bearing apparatus of the present invention, and Fig. 5 is a partially enlarged partial view of Fig. 4. Same reference numerals are used in parts or portions of this second embodiment as those of the first embodiment and thus detailed description of them will be omitted.

A protecting cover 19 is mounted on the inner-side end of the outer member 2 is press-formed of non-magnetic austenitic stainless steel sheet (JIS SUS 304 etc.) or preserved cold rolled steel sheet (JIS SPCC etc.) as having a substantially dish-shaped configuration. The protecting cover 19 comprises the cylindrical fitting portion 10a adapted to be press-fitted onto the inner circumference of the inner-side end of the outer member 2, a disc-shaped shielding portion 19a extending radially inward from the fitting portion 10a via the radially tapered portion 10b, and a bottom portion 19b extending from the shielding portion 19a via a cylindrical portion or stepped portion 10d and covering the inner-side end of the inner member 1. The bottom portion 19b of the protecting cover 19 has multiple bent portions so as to have a portion recessed toward a recessed portion 7a of the caulked portion 7. Similarly to the first embodiment, this makes it possible to increase the rigidity of the protecting cover 19 and thus to prevent its deformation which would be caused by bounced pebbles.

As shown in the enlarged view of Fig. 5, a flat relief portion 20 is formed between the radially tapered portion 10b and the shielding portion 19a of the protecting cover 19 in parallel with the shielding portion 19a and also formed so that it is slightly recessed from the shielding portion 19a toward the radially tapered portion 10b. In particular, the protecting cover 19 is press-formed so that the relief portion 20 has a sheet thickness t1 thinner than the sheet thickness t0 of other portions, i.e. the fitting portion 10a, the radially tapered portion 10b, shielding portion 10c, the cylindrical portion i.e. stepped portion 10d and the bottom portion 19b. The elastic member 18 is securely adhered to the protecting cover 19 over a region from the outer circumference of the radially tapered portion 10b to a position slightly projected from the inner-side surface of the relief portion 20 toward the shielding portion 10c.

Furthermore, the sheet thickness t1 of the relief portion 20 of the protecting cover 19 is set 0.4 mm or more and the ratio t1/t0 of the sheet thickness t1 of the relief portion 20 and the sheet thickness t0 of other portions of the protecting cover 19 is set 80% or more (t1/t0≥0.80). This makes it possible to assure sufficient rigidity and to absorb the deformation of the protecting cover 19 caused during press-fitting of it into the outer member 2 and thus to suppress the deformation of the shielding portion 19a which would adversely influence the detecting accuracy.

The present invention has been described with reference to the preferred embodiments. Obviously, modifications and alternations will occur to those of ordinary skill in the art upon reading and understanding the preceding detailed description. It is intended that the present invention be construed as including all such alternations and modifications insofar as they come within the scope of the appended claims or the equivalents thereof.

### Applicability in Industry

The wheel bearing apparatus of the present invention can be applied to wheel bearing apparatus of first through third generation types of inner ring rotation type used for a driven wheel.

### Description of Reference numerals

- 1: inner member
- 2: outer member
- 2a: outer raceway surface
- 2b: body mounting flange
- 2c: inner circumference of inner-side end of outer member
- 3: rolling element
- 4: hub wheel
- 4a, 5a: inner raceway surface
- 4b: cylindrical portion
- 5: inner ring
- 6: wheel mounting flange
- 6a: hub bolt
- 6b: inner side base portion
- 7: caulked portion
- 7a: recessed portion
- 8: cage
- 9: seal
- 10, 17, 19: protecting cover
- 10a: fitting portion
- 10b: radially tapered portion
- 10c, 19a: shielding portion
- 10d: cylindrical portion
- 10e, 19b: bottom portion
- 11: core metal
- 12: sealing member
- 12a, 12b: side lip
- 12c: grease lip
- 13: support ring
- 13a: cylindrical portion
- 13b: standing portion
- 14: magnetic encoder
- 15, 18: elastic member
- 15a: projected portion
- 15b, 18a: annular portion
- 16, 20: relief portion
- 16a: bent portion
- 50: outer member
- 50a: outer raceway surface
- 50b: body mounting flange
- 51: inner member
- 52: ball
- 53: hub wheel
- 53a, 54a: inner raceway surface
- 53b: cylindrical portion
- 53c: caulked portion
- 54: inner ring
- 55: wheel mounting flange
- 55a: base portion
- 56: sealing ring
- 57: encoder
- 58: support ring
- 59: encoder body
- 60, 67: cover
- 61: closing plate portion
- 62: fitting portion
- 63: sensor
- 64: detecting portion
- 65: knuckle
- 66: screw
- 67a: radially tapered portion
- 68: sealing member
- A: sensing area
- B: separated amount (distance) between bent portion and sensing area
- C: step height between relief portion and shielding portion
- D: separated amount (distance) between bent portion and magnetic encoder
- δ: projected amount of elastic member
- S: sensor
- S1: detecting portion
- t0: thickness of protecting cover
- t1: thickness of relief portion of protecting cover

## Claims

1. A wheel bearing apparatus comprising:
an outer member (2) integrally formed on its inner circumference with double row outer raceway surfaces (2a, 2a) ;
an inner member (1) including a hub wheel (4) and at least one inner ring (5), the hub wheel (4) being integrally formed on its one end with a wheel mounting flange (6) and having a cylindrical portion (4b) axially extending from the wheel mounting flange (6), the inner ring (5) being press-fitted onto the cylindrical portion (4b) of the hub wheel (4), the hub wheel (4) and the inner ring (5) being formed on their outer circumferences with double row inner raceway surfaces (4a, 5a) opposing to the double row outer raceway surfaces (2a, 2a);
double row rolling elements (3, 3) contained between the inner and outer raceway surfaces (4a, 5a; 2a, 2a) of the inner and outer members (1, 2);
a magnetic encoder (14) mounted on the outer circumference of the inner ring (5); and
annular openings formed by the inner and outer members (1, 2) being sealed by a seal (9) mounted on the outer-side end of the outer member (2) and by a protecting cover (10, 17, 19) mounted on the inner-side end of the outer member (2) **characterized in:**
**that** the protecting cover (10, 17, 19) is formed of non-magnetic material as having a substantially dish-shaped configuration and comprises a cylindrical fitting portion (10a) adapted to be press-fitted onto the inner circumference of the inner-side end of the outer member (2), a disc-shaped shielding portion (10c, 19a) extending radially inward from the fitting portion (10a) via a radially tapered portion (10b) and adapted to be closely arranged to or contacted by a sensor (S), and a bottom portion (10e, 19b) extending from the shielding portion (10c, 19b) via a stepped portion (10d) and covering the inner-side end of the inner member (1);
**that** a flat relief portion (16, 20) is formed between the radially tapered portion (10b) and the shielding portion (10c, 19a) in parallel with the shielding portion (10c, 19a) and set slightly back from the shielding portion (10c, 19a) toward the radially tapered portion (10b); and
**that** an elastic member (15, 18) is integrally adhered to the outer circumference of the radially tapered portion (10b) via vulcanizing adhesion and adapted to be elastically contacted with the inner circumference of the inner-side end of the outer member (2).

2. A wheel bearing apparatus of claim 1 wherein the elastic member (15, 18) comprises an annular portion (15b, 18a) formed as having an outer diameter smaller than that of the fitting portion (10a) of the protecting cover (10, 17, 19) and a projected portion (15a) formed as having an outer diameter larger than that of the fitting portion (10a) of the protecting cover (10, 17, 19) and adapted to be press-fitted into the inner circumference of the inner-side end of the outer member (2) via a predetermined interference.

3. A wheel bearing apparatus of claim of 1 or 2 wherein the elastic member (15) extends over a region from the outer circumference of the radially tapered portion (10b) to the inner-side surface of the relief portion (16, 20).

4. A wheel bearing apparatus of claim 1 or 2 wherein the elastic member (18) is securely adhered to the protecting cover (17) over a region from the outer circumference of the radially tapered portion (10b) to a position slightly projected from the inner-side surface of the relief portion (16, 20) toward the shielding portion (10c, 19a).

5. A wheel bearing apparatus of claim 1 wherein the protecting cover (10, 17, 19) is press-formed of austenitic stainless steel sheet and a bent portion (16a) between the relief portion (16) and the shielding portion (10c) of the protecting cover (10) is set spaced apart from the sensing area (A) of the sensor (S) by a predetermined separated distance (B) so that it does not enter into the sensing area (A).

6. A wheel bearing apparatus of claim 5 wherein the diameter of the bent portion (16a) between the relief portion (16) and the shielding portion (10c) of the protecting cover (17) is set larger than the outer diameter of the encoder (14).

7. A wheel bearing apparatus of claim 5 or 6 wherein the protecting cover (19) is press-formed so that the relief portion (20) has a sheet thickness (t1) thinner than that (t0) of other portions of the protecting cover (19).

8. A wheel bearing apparatus of claim 7 wherein the sheet thickness (t1) of the relief portion (20) of the protecting cover (19) is set 0.4 mm or more and the ratio (t1/t0) of the sheet thickness (t1) of the relief portion (20) and that (t0) of other portions of the protecting cover (19) is set 80%or more (t1/t0≥0.80).

9. A wheel bearing apparatus of claim 1 wherein the bottom portion (10e, 19b) of the protecting cover (10, 17, 19) has multiple bent portions so as to have an outline configuration along the inner-side end of the inner member (1).

10. A wheel bearing apparatus of claim 1 wherein the material of the elastic member (15, 18) is selected from a group of HNBR, EPDM, ACM, FKM and silicone rubber.

## Patentansprüche

1. Radlagervorrichtung, umfassend:
ein äußeres Element (2), das an seinem Innenumfang einstückig mit Doppelreihen-Außenlaufbahnflächen (2a, 2a) ausgebildet ist;
ein inneres Element (1), das eine Radnabe (4) und mindestens einen Innenring (5) enthält, wobei die Radnabe (4) an ihrem einen Ende mit einem Radbefestigungsflansch (6) einstückig ausgebildet ist und einen zylindrischen Abschnitt (4b) aufweist, der sich axial von dem Radbefestigungsflansch (6) erstreckt, wobei der Innenring auf den zylindrischen Abschnitt (4b) der Radnabe (4) pressgepasst ist, wobei die Radnabe (4) und der Innenring (5) auf ihren Außenumfängen mit Doppelreihen-Innenlaufbahnflächen (4a, 5a) ausgebildet sind, die den Doppelreihen-Außenlaufbahnflächen (2a, 2a) gegenüberliegen;
Doppelreihen-Rollelemente (3, 3), die zwischen den Innen- und Außenlaufbahnflächen (4a, 5a; 2a, 2a) des inneren und des äußeren Elements (1, 2) enthalten sind;
einen Magnetgeber (14), der an dem Außenumfang des Innenrings (5) angebracht ist; und
ringförmige Öffnungen, die von dem inneren und dem äußeren Element (1, 2) gebildet werden, die durch eine Dichtung (9), die an dem Außenseitenende des äußeren Elements (2) angebracht ist, und durch eine Schutzabdeckung (10,17, 19), die auf dem Innenseitenende des äußeren Elements (2) angebracht ist, abgedichtet werden,
**dadurch gekennzeichnet:**
**dass** die Schutzabdeckung (10, 17, 19) aus nichtmagnetischem Material als eine im Wesentlichen tellerförmige Konfiguration aufweisend ausgebildet ist und einen zylindrischen Passabschnitt (10a), der angepasst ist, auf den Innenumfang des Innenseitenendes des äußeren Elements (2) pressgepasst zu werden, einen scheibenförmigen Abschirmabschnitt (10c, 19a), der sich von dem Passabschnitt (10a) über einen radial kegelförmigen Abschnitt (10b) radial nach innen erstreckt und angepasst ist, von einem Sensor (S) nah angeordnet oder berührt zu werden, und einen Bodenabschnitt (10e,19b), der sich über einen abgestuften Abschnitt (10d) von dem Abschirmabschnitt (10c, 19b) erstreckt und das Innenseitenende des inneren Elements (1) abdeckt, umfasst;
**dass** ein flacher Reliefabschnitt (16, 20) zwischen dem radial kegelförmigen Abschnitt (10b) und dem Abschirmabschnitt (10c, 19a) parallel zu dem Abschirmabschnitt (10c, 19a) gebildet ist und von dem Abschirmabschnitt (10c, 19a) leicht in Richtung des radial kegelförmigen Abschnitts (10b) zurückgesetzt ist; und dass ein elastisches Element (15, 18) durch Vulkanisierungshaftung einstückig an dem Außenumfang des radial kegelförmigen Abschnitts (10b) anhaftet und angepasst ist, mit dem Innenumfang des Innenseitenendes des äußeren Elements (2) elastisch in Kontakt gebracht zu sein.

2. Radlagervorrichtung nach Anspruch 1, wobei das elastische Element (15,18) einen ringförmigen Abschnitt (15b, 18a), der als einen Außendurchmesser, der kleiner ist als jener des Passabschnitts (10a) der Schutzabdeckung (10, 17, 19), aufweisend ausgebildet ist, und einen hervorstehenden Abschnitt (15a), der als einen Außendurchmesser, der größer ist als jener des Passabschnitts (10a) der Schutzabdeckung (10,17,19), aufweisend ausgebildet ist und angepasst ist, über ein vorgegebenes Übermaß in den Innenumfang des Innenseitenendes des äußeren Elements (2) pressgepasst zu werden, umfasst.

3. Radlagervorrichtung nach Anspruch 1 oder 2, wobei sich das elastische Element (15) über einen Bereich von dem Außenumfang des radial kegelförmigen Abschnitts (10b) zu der Innenseitenfläche des Reliefabschnitts (16, 20) erstreckt.

4. Radlagervorrichtung nach Anspruch 1 oder 2, wobei das elastische Element (18) über einem Bereich von dem Außenumfang des radial kegelförmigen Abschnitts (10b) zu einer Position, die leicht von der Innenseitenfläche des Reliefabschnitts (16, 20) in Richtung des Abschirmabschnitts (10c, 19a) hervorsteht, fest an der Schutzabdeckung (17) anhaftet.

5. Radlagervorrichtung nach Anspruch 1, wobei die Schutzabdeckung (10,17,19) aus austenitischem Edelstahlblech pressgeformt ist und ein gebogener Abschnitt (16a) zwischen dem Reliefabschnitt (16) und dem Abschirmabschnitt (10c) der Schutzabdeckung (10) von dem Erkennungsbereich (A) des Sensors (S) um einen vorgegebenen getrennten Abstand (B) beabstandet festgelegt ist, so dass er nicht in den Erkennungsbereich (A) eintritt.

6. Radlagervorrichtung nach Anspruch 5, wobei der Durchmesser des gebogenen Abschnitts (16a) zwischen dem Reliefabschnitt (16) und dem Abschirmabschnitt (10c) der Schutzabdeckung (17) breiter als der Außendurchmesser des Gebers (14) festgelegt ist.

7. Radlagervorrichtung nach Anspruch 5 oder 6, wobei die Schutzabdeckung (19) so pressgeformt ist, dass der Reliefabschnitt (20) eine Blechdicke (t1) aufweist, die dünner als die Dichte (t0) anderer Abschnitte der Schutzabdeckung (19) ist.

8. Radlagervorrichtung nach Anspruch 7, wobei die Blechdicke (t1) des Reliefabschnitts (20) der Schutzabdeckung (19) auf 0,4 mm oder mehr festgelegt ist und das Verhältnis (t1/t0) der Blechdicke (t1) des Reliefabschnitts (20) und jener (t0) anderer Abschnitte der Schutzabdeckung (19) auf 80% oder mehr (t1/t0≥0,80) festgelegt ist.

9. Radlagervorrichtung Anspruch 1, wobei der Bodenabschnitt (10e, 19b) der Schutzabdeckung (10, 17, 19) mehrere gebogene Abschnitte aufweist, um eine Umrissanordnung entlang des Innenseitenendes des inneren Elements (1) aufzuweisen.

10. Radlagervorrichtung von Anspruch 1, wobei das Material des elastischen Elements (15,18) aus einer Gruppe aus HNBR, EPDM, ACM, FKM und Silikongummi ausgewählt ist.

## Revendications

1. Appareil de roulement de roue comprenant :
un élément extérieur (2) formé solidairement sur sa circonférence intérieure avec des surfaces de chemin de roulement extérieur à deux rangées (2a, 2a) ;
un élément intérieur (1) comprenant une roue à moyeu (4) et au moins une bague intérieure (5), la roue à moyeu (4) étant formée solidairement sur son extrémité avec une bride de fixation de roue (6) et ayant une portion cylindrique (4b) s'étendant axialement à partir de la bride de fixation de roue (6), la bague intérieure (5) étant montée en force sur la portion cylindrique (4b) de la roue à moyeu (4), la roue à moyeu (4) et la bague intérieure (5) étant formées sur leurs circonférences extérieures avec des surfaces de chemin de roulement intérieur à deux rangées (4a, 5a), lesdites surfaces étant opposées aux surfaces de chemin de roulement extérieur à deux rangées (2a, 2a) ;
des éléments de roulement à deux rangées (3, 3) contenus entre les surfaces de chemin de roulement intérieur et extérieur (4a, 5a ; 2a, 2a) des éléments intérieur et extérieur (1, 2) ;
un codeur magnétique (14) monté sur la circonférence extérieure de la bague intérieure (5) ; et
des ouvertures annulaires formées par les éléments intérieur et extérieur (1, 2) rendus hermétiques par un joint d'étanchéité (9) monté sur l'extrémité côté extérieur de l'élément extérieur (2) et par un couvercle de protection (10,17,19) monté sur l'extrémité côté intérieur de l'élément extérieur (2),
**caractérisé en ce que**
le couvercle de protection (10,17,19) est formé à partir d'un matériau non magnétique, en ayant une configuration sensiblement en forme de cuvette, et comprend une portion de montage cylindrique (10a) adaptée pour être montée en force sur la circonférence intérieure de l'extrémité côté intérieur de l'élément extérieur (2), une portion de blindage en forme de disque (10c, 19a) s'étendant radialement vers l'intérieur à partir de la portion de montage (10a) via une portion radialement conique (10b), ladite portion de blindage étant adaptée pour être agencée au plus près d'un capteur (S) ou pour être placée au contact de celui ci, et comprend une portion inférieure (10e, 19b) s'étendant à partir de la portion de blindage (10c, 19b) via une portion étagée (10b) et couvrant l'extrémité côté intérieur de l'élément intérieur (1) ; et
**en ce qu'**une portion à relief plat (16, 20) est formée entre la portion radialement conique (10b) et la portion de blindage (10c, 19a), ladite portion à relief plat étant parallèle à la portion de blindage (10c, 19a) et placée légèrement en arrière par rapport à la portion de blindage (10c, 19a) vers la portion radialement conique (10b) ; et
**en ce qu'**un élément élastique (15,18) est solidairement collé sur la circonférence extérieure de la portion radialement conique (10b) grâce à une adhérence obtenue par vulcanisation, ledit élément élastique étant adapté pour être élastiquement au contact de la circonférence intérieure de l'extrémité côté intérieur de l'élément extérieur (2).

2. Appareil de roulement de roue selon la revendication 1, dans lequel l'élément élastique (15,18) comprend une portion annulaire (15b, 18a) formée en ayant un diamètre extérieur plus petit que celui de la portion de montage (10a) du couvercle de protection (10, 17, 19), ledit élément élastique comprenant une portion en saillie (15a) formée en ayant un diamètre extérieur plus grand que celui de la portion de montage (10a) du couvercle de protection (10,17,19) et adaptée pour être ajustée en force dans la circonférence intérieure de l'extrémité côté intérieur de l'élément extérieur (2) grâce à une interférence prédéterminée.

3. Appareil de roulement de roue selon la revendication 1 ou 2, dans lequel l'élément élastique (15) s'étend sur une région allant de la circonférence extérieure de la portion radialement conique (10b), jusqu'à la surface côté intérieur de la portion en relief (16, 20).

4. Appareil de roulement de roue selon la revendication 1 ou 2, dans lequel l'élément élastique (18) est solidement collé sur le couvercle de protection (17), sur une région allant de la circonférence extérieure de la portion radialement conique (10b) jusqu'à une position légèrement en saillie par rapport à la surface côté intérieur de la portion en relief (16, 20), vers la portion de blindage (10c, 19a).

5. Appareil de roulement de roue selon la revendication 1, dans lequel le couvercle de protection (10, 17, 19) est formé à la presse, à partir d'une tôle en acier inoxydable austénitique, et une portion courbée (16a) située entre la portion en relief (16) et la portion de blindage (10c) du couvercle de protection (10) est placée en étant espacée de la zone de détection (A) du capteur (S) suivant une distance de séparation prédéterminée (B), de sorte que ladite portion courbée n'entre pas dans la zone de détection (A).

6. Appareil de roulement de roue selon la revendication 5, dans lequel le diamètre de la portion courbée (16a) située entre la portion en relief (16) et la portion de blindage (10c) du couvercle de protection (17) est réglé en étant plus grand que le diamètre extérieur du codeur (14).

7. Appareil de roulement de roue selon la revendication 5 ou 6, dans lequel le couvercle de protection (19) est formé à la presse, de sorte que la portion en relief (20) a une épaisseur de tôle (t1) plus mince que l'épaisseur (t0) d'autres portions du couvercle de protection (19).

8. Appareil de roulement de roue selon la revendication 7, dans lequel l'épaisseur de tôle (t1) de la portion en relief (20) du couvercle de protection (19) est réglée en étant égale à 0,4 mm ou plus, et le rapport (t1/t0) de l'épaisseur de tôle (t1) de la portion en relief (20), relativement à l'épaisseur (t0) d'autres portions du couvercle de protection (19), est réglé en étant égal à 80 % ou plus (t1/t0 ≥ 0,80).

9. Appareil de roulement de roue selon la revendication 1, dans lequel la portion inférieure (10e, 19b) du couvercle de protection (10, 17, 19) a de multiples portions courbées, de façon à avoir une configuration de contour le long de l'extrémité côté intérieur de l'élément intérieur (1).

10. Appareil de roulement de roue selon la revendication 1, dans lequel le matériau de l'élément élastique (15,18) est sélectionné parmi un groupe comprenant des matériaux de type HNBR, EPDM, ACM, FKM et comprenant du caoutchouc à base de silicone.
